# EUROPEAN PATENT SPECIFICATION

(11) **EP 3 898 201 B1**
(45) Date of publication and mention of the grant of the patent: **14.02.2024**
(21) Application number: 19818113.3
(22) Date of filing: 17.12.2019
(51) Int. Cl.: B29C 51/08, B29C 65/02, B29C 65/08, B29C 65/18, B65B 7/28, B65D 77/20, B65D 85/804, B29C 51/14, B29C 51/26, B29C 65/36, B29K 711/12

(54) **MANUFACTURING PROCESS FOR PRODUCING HERMETIC SINGLE-USE FOOD CONTAINERS USING A SEALING HEAD HAVING A SPECIFIC PROFILE WITH A RIB**
FERTIGUNGSVERFAHREN ZUR HERSTELLUNG VON HERMETISCHEN EINWEGLEBENSMITTELBEHÄLTERN UNTER VERWENDUNG EINES SIEGELKOPFES MIT EINEM SPEZIFISCHEN PROFIL MIT EINER RIPPE
PROCÉDÉ DE FABRICATION DE RÉCIPIENTS ALIMENTAIRES HERMÉTIQUES À USAGE UNIQUE À L'AIDE D'UNE TÊTE DE SCELLAGE AYANT UN PROFIL SPÉCIFIQUE AVEC UNE NERVURE

(30) Priority: 19.12.2018 EP 18213847
(43) Date of publication of application: 27.10.2021
(73) Proprietor: Société des Produits Nestlé S.A., 1800 Vevey (CH)
(72) Inventor: GRES, Nicolas, 01170 Echenevex (FR); HEYDEL, Christophe,Sébastien,Paul, 2025 Chez-Le-Bart (CH); NEYRET, Pierre,Nicolas, 1350 Orbe (CH); KOLLEP, Alexandre, 1095 Lutry (CH)
(74) Representative: Navarro Fernández, Maria Isabel
(86) International application number: PCT/EP2019/085488
(87) International publication number: WO 2020/127149

(56) References cited:
- EP-A1- 2 206 658
- EP-A1- 3 150 502
- CH-A5- 652 965
- FR-A- 1 544 071
- US-A- 4 991 375
- US-A- 5 096 052

## Description

### Field of the invention

The invention deals with containers, more particularly with single-use containers hermetically closed by a lid film or other top designed to minimize airflow or vapor flow into the container. Such containers are used for foodstuff, such as the coffee pods to be used in beverage system.

Single-use containers hermetically closed by a lid film are well known. Such containers usually include:
- a container body having a sidewall or sidewalls and a rim extending outwardly from the top of the sidewall(s),
- and a lid film or analogous that closes the top of the container body by being sealed with the rim.

### Background of the invention

Some known container bodies are made from a laminated material including a plastic barrier.

On the one hand, single-use plastic barrier containers already in the market exhibits good sealing between the container body and the lid thanks to plastic stretchability, which is around 600%. The rim of the plastic thermoformed/injected container body has a flat surface and a constant thickness. The sealing of the lid onto the rim of such container bodies is therefore strong.

On the other hand, consumers seek for more eco-friendly and environment-friendly packaging materials, with "natural" appealing aspects.

PLA laminate (like PLA/PVOH/PLA, where PLA means polylactic acid and PVOH means polyvinyl alcohol) is compostable, while paper provides a "natural" feeling. Therefore, a single-use container body made of Paper/PLA laminate would answer to consumers' concerns. The heat-sealing is done by the PLA plastic material. EP 2 206 658 A1 discloses containers with a container body made of paper laminate, especially with a layer of PLA plastic material, onto which a lid is sealed.

Unfortunately, paper stretchability is around 10%. Thus, for container bodies made from such material with paper, when the flat paper is formed in a three-dimensional shape, wrinkles (up to 1 mm) appear at the surface of the container rim. Therefore, channels are created between the container body and the closing lid or between the layers of the paper-laminated material. Such channels allow for gas and vapor (moisture) to enter the container, which is detrimental to the quality of the ingredient contained therein, after storage periods. During heat-sealing with usual heat-sealing heads, the wrinkles remain in some extend and sealing is not ensured in the wrinkles. Thus, even though a partially effective seal may be created, the container contents are nonetheless exposed to some amount of external air and moisture seeping through these wrinkles. This in turn accelerates the spoiling of the container's content. Oxygen and vapor barrier properties in the rim are insufficiently obtained.

A known solution is to add a plastic rim to ensure smooth and regular rim surface. Such containers with encapsulated rim features are disclosed by EP1485178. Indeed, EP1485178 proposes various container bodies having fully or partially-encapsulated rim or flange. The encapsulating material is generally made of a plastic such as polyolefin, nylon, polyethylene terepthalate, polycarbonate, or other engineering thermoplastic resins. This encapsulating material covers at least a portion of the rim or flange and may extend a distance from the rim's outer edge. The exterior of the encapsulating material is substantially smooth, even those portions filling or overlying irregularities in the rim. Further, the encapsulated rim presents a hermetic barrier to gases and moisture, and may be sealed with a film or other material to completely insulate the container interior.

But the polymer used for the encapsulation is expensive and the amount used increases the cycle time required to form useful container bodies. Besides, the manufacturing process becomes complex.

To reduce the impact of the encapsulating of the rim on manufacturing costs and time, EP1485178 proposes to reduce the amount of polymer by encapsulating only a portion of the rim or flange. For example, only the underside of the rim is covered with the encapsulating material. By injecting resin only on the under or backside of the rim during the injection-molded process, the exposed paperboard pleats on the upper surface of the rim are pressed upwardly against a surface of the metal mold by the hot, high-pressure injectant, which compresses or "irons" the pleats on the upper surface of the flange. This creates an improved sealing surface on the upper side that helps ensuring that a hermetic seal is obtained across the now-flattened pleats. Moreover, the smooth surface of the encapsulated underside of the rim can also be bound to the lid while this latter is bent downwardly.

Nevertheless this solution still uses encapsulating material and injection of this material into a mold. So the manufacturing costs and time are reduced but only in a quite low extend. Besides, this solution does not come up to the consumers' expectations for more natural and recyclable products.

Another solution that is disclosed in Billerud's WO 2015/082268 patent application as well as EP 3 150 502 A1 patent application, wherein the wrinkles created by the three-dimensional deformation of the paper layer of the container body, are reclosed by spraying or otherwise coating a material to "fill" the wrinkles before the top lid is sealed thereto. This solution has the drawback that it requires an additional component to the structure of the pod (i.e. the rim coating material) and also an additional spraying step and equipment which adds cost and complexity to the process.

Consequently, a need exists to develop a method for ensuring proper sealing of Paper/PLA laminates, that uses current manufacturing technologies and that does not add any additional container element.

### Summary of the invention

An object of the present invention is to provide a simpler and cost-saving manufacturing process for producing hermetic single-use food containers such as coffee pods. In particular, the object of the invention is to avoid the need for encapsulating, even partially, the rim of the pod.

The manufacturing method of the present invention also aims to obtain an efficient sealing on the rim of single-use food containers to ensure in-cup quality and adequate shelf-life through efficient oxygen and vapor barrier properties, even with a container body made from paper/PLA laminate.

In other words, an object of the invention is to provide a new nature-friendly pod with no encapsulated rim feature but which is at least as hermetic as the prior pods having encapsulated rim features.

To this end, the manufacturing process for producing hermetic single-use food containers according to claim 1 is proposed.

It is to be noted that, the sealing step in a process according to the invention can use heat-sealing or ultrasonic-sealing technics, whereby the sealing head can comprise heating elements or means for producing ultrasonic vibrations. Other types of sealing, for example induction sealing, are also possible.

Besides, in all the description, the *"sealing surface"* of a die refers to the surface of the die that contacts with, or more generally acts on, the lid or the container body during the sealing. This surface can have the same dimensions as the rim or can be smaller. Moreover, the sealing surfaces of the two dies might have different widths.

During the sealing, the rib of the first die flattens the wrinkles, erases the channels between the two membranes and produce one continuous sealing line.

Preferably, the rib height is less than the thickness of the container body.

Thanks to the rib of the first die of the sealing head according to the invention, the container body can be made from a sheet of paper/PLA laminate using a very simple manufacturing process, which can be summed up in a sealing stamping step with a very basic sealing head which is a mere heating or ultrasonic press with no injecting elements. The only specificity of the sealing head is the design of its sealing parts which includes a rib the height of which is higher than the depth of the wrinkles in the rim.

It is to be noted that in all the description, the term "a" means "at least one" (but not "one and only one") unless otherwise mentioned. Thus, the first die may have two or more concentric ribs in its sealing surface.

Preferably, the sealing head is the head of a vertical press that is to say that the sealing head is arranged such that the mobile die is translated in a vertical direction (the sealing line is then in a horizontal plan), the sealing head having an upper die and a lower die.

In such a configuration, the first die (with the rib) can be the upper die, the second die being the lower die, whereby the sealing groove engraved by the rib is formed in the top side of the rim. Alternatively, the first die is the lower die, the second die being the upper die, and the sealing groove is formed in the underside of the rim.

The sealing surface of the second die can be flat, more specifically flat and rigid. Alternatively, the sealing surface of the second die can be provided with a sealing groove or with a rubber seat in front of the rib of the first die.

In a preferred embodiment, the first die is the lower die of a vertical press (the second die being the upper die) and the sealing surface of the second die is flat and rigid. Consequently, a sealing groove is formed by the rib in the underside of the rim whereas the top surface of the closing lid remains flat in front of the rim. Thus, if a reference code is printed on the top surface of the closing lid at the rim, this reference code is not distorted by the sealing process and the sealing groove in the underside of the rim does not disturb the reading of this reference code.

Preferably, the container body, the rim and the sealing surfaces of the sealing head have a circular section. In that case, the rib of the first die is also advantageously circular.

It is also disclosed the device used to perform the manufacturing process according to the invention, in particular, a sealing head for sealing a closing lid on a rim of a container body of a single-used food container, wherein the sealing head includes a first die and a second die, one of which being mobile, the first die and the second die having cooperating annular sealing surfaces that face the rim when the container body is placed in the sealing head. The sealing head is such that the first die is provided with an annular rib in its sealing surface, the rib having a height which is at least equal to a maximum depth of wrinkles that might appear in the rim upon forming the container body.

In a preferred embodiment adapted for manufacturing pods such as coffee pods, the annular sealing surfaces of the dies and the rib of the first die are all circular.

In a preferred embodiment specifically suitable for manufacturing coffee pods made from a sheet of paper/PLA laminate, the height of the rib is at least equal to 0.7mm, preferably at least equal to 1mm.

More generally, the height of the rib is preferably comprised between 0.1mm and 4mm, and the width of the rib is preferably comprised between 0.15mm and 6mm. Besides, the width of the rib is preferably less than three times the height of the rib.

The invention also concerns a hermetic single-use food container according to claim 5. container is such that:
- the container body is made in a paper-laminated material and have wrinkles at least at the rim, the wrinkles extending essentially radially,
- it shows an annular sealing groove engraved on a side of the rim which extends continuously essentially in a circumferential direction all around the rim and which has a depth at least equal to a maximum depth of the wrinkles whereby the wrinkles are flattened by the sealing groove, the closing lid being bound to the rim of the container body at least in the region of the sealing groove.

As regards the first point above, the terms "paper-laminated material" means that the material constituting the container body includes several layers one of which is a paper sheet. Besides, the wrinkles are the result of the forming of the (3D) container body from a 2D blank of the paper-laminated material.

As regards the second point, a direct consequence of the sealing groove (by flattening the wrinkles) is that the top surface of the rim of the container body is flat in front of the groove and is therefore able to be hermetically bound to the closing lid in that region.

In a preferred embodiment, the closing lid has a top surface which is flat at least at the rim.

In a preferred embodiment, the sealing groove is engraved in an underside of the rim.

In a preferred embodiment, the container body is made from a sheet of PLA - PVOH - PLA of 50 µm laminated with a formable paper of 130g/m² and the lid film is made from a sheet including a PLA barrier laminated with a paper of 30 g/m².

The sealing groove engraved in a side of the rim can have a height comprised between 0.05mm and 3mm, and a width comprised between 0.15mm to 5mm. Besides, the width of the sealing groove is preferably less than three times the height of the rib; more preferably, the width and the height of the sealing groove are equivalent.

### Brief description of the drawings

Additional features and advantages of the present invention are described in, and will be apparent from, the description of the presently preferred embodiments which are set out below with reference to the drawings in which:
**Figure 1** is a schematic view in perspective of a container body according to the invention or to the prior art.
**Figure 2** is a schematic cross-section of single-use food container according to the invention.
**Figure 3** is a schematic cross-section of a forming device that can be used in a manufacturing process according to the invention.
**Figure 4** is a schematic cross-section of a portion of an embodiment of a sealing head according to the invention.

### Detailed description of the invention

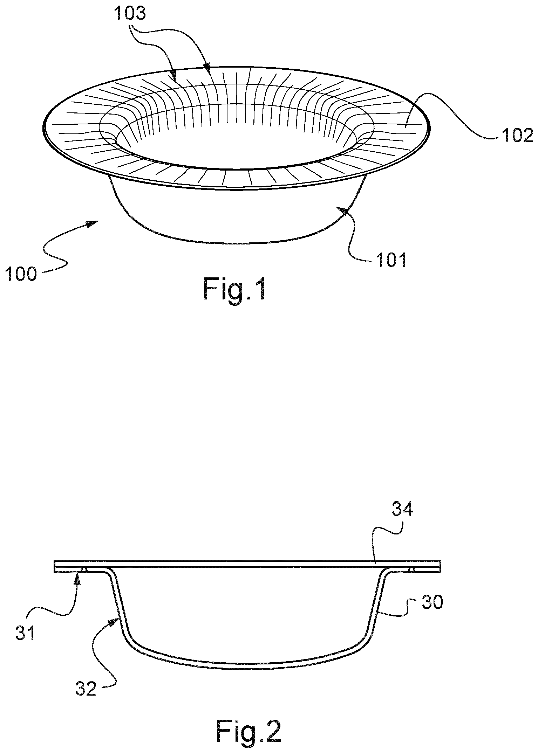

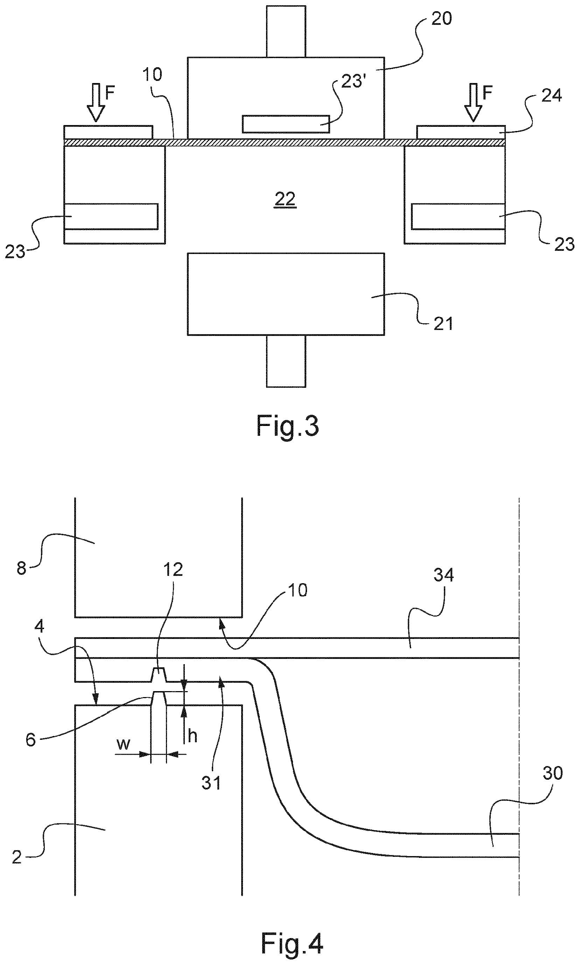

The first step of the manufacturing process according to the invention aims to produce a 3D container body such as the container body 100 shown at **Figures 1** and **2****,** from a 2D blank 10 illustrated in **Figure 3****.** The forming process used in the manufacturing process according to the invention can be chosen from known sliding blank processes (where the sliding of the blank into the mould and the lateral contraction of the blank cause the micro-folding of the blank) such as stamping processes or deep-drawing processes, or from known fixed blank processes (where the container is formed essentially via straining of the blank) such as air forming/vacuum forming processes and hot pressing processes, depending on the desired shape (in particular the desired depth) for the container body, the material of the blank, etc.

For example, the forming of the container body can be carried on by deep-drawing with a press as illustrated at **Figure 3****,** comprising a male die 20 while the female mould can be absent, present as a counter holder 21 as illustrated or used to emboss the under of the shape. The 2D blank 10 is placed into the forming machine where it is clamped by a blank holder 24 with a predetermined force F; subsequently, the male die 20 starts a downward movement towards the counter holder 21 along a forming cavity 22, which is where the actual forming occurs. Finally, the shape is released from the forming device. The forming cavity is preferably surrounded by heating elements 23. Heating elements 23' can also be provided in the male die 20.

The whole forming sequence can be as short as a couple of seconds. The selection of forming parameters such as the die force, the blank holding force F, the forming gap or clearance (which is the lateral distance between the edge of the forming cavity and the edge of the male die) is performed empirically.

As to the forming gap, it can be noted that this distance is varied, among others, according to the thickness of the material from which the blank is made. Too small a forming gap increases the out-of-plane and in-plane shear and forces. This can lead to the formation of cracks and eventual failure of material in the formed shape. Typically, the gap is around 0.7times the thickness of the paperboard (it can be noticed that dimensions and ratios are not respected at **Figure 3****,** which is very schematic). On the other hand, too large a forming gap leads to the poor appearance of the shape and to significant wrinkles that create voids which restrict the possibility of gas-tight sealing of such shapes.

As a negative consequence of the forming process, the container body 100 exhibits wrinkles 103 (see **Figure 1**) essentially in the rim 102 and at the junction between the rim 102 and the sidewall 101 and on a large part of the sidewall 101.

To close the container body thus obtained, a closing lid (not shown at **Figure 1**) is later sealed on the upper surface of the rim 102 after the container body 100 has been filled with food. The wrinkles 103 compromise the perfect sealing of the closing lid with the rim and a hermetic seal cannot be obtained. In particular, the wrinkles formed at the surface of the rim are oriented in the radial direction of the container body 100, and their impair the correct flatness of the rim. Therefore, when the upper lid is sealed onto said rim, radial channels are created along the wrinkles, through which oxygen and moisture are able to circulate from outside the container, into the internal compartment of said container, hence rapidly degrading the quality of the food contained therein.

To solve this problem, the invention proposes to use a sealing head one die of which has a sealing surface with a specific profile. An example of a sealing head according to the invention is partially represented at **Figure 4** with a container body 30 and a closing lid 34 therein. The sealing head includes a fixed lower die (first die) 2 with an annular top sealing surface 4 and a movable upper die (second die) 8 with a bottom sealing surface 10, the cooperating sealing surfaces 4 and 10 being circular and having a width that corresponds to the width of the rim 31 of the container body 30.

The sealing surface 4 of the first die 2 includes a circular rib 6, while the sealing surface 10 of the second die 8 is flat (planar). The rib 6 causes a sealing groove 12 in the underside of the rim that erases the wrinkles (such wrinkles are not represented at **Figure 4**). More precisely, the formation of the groove 12 in a direction which is orthogonal to the direction of the wrinkles, "flattens" and therefore recloses the wrinkles by pushing the material of the rim back into the empty space of each wrinkle. As a consequence, all wrinkles on the periphery of the rim are eliminated by deformation of the material, at least in the region of the groove. In a highly preferred embodiment of the invention, the groove is formed on the underside of the rim (as illustrated in **Figure 4**), although the wrinkle-removing groove could be formed on the upper surface of the container rim. By forming the groove on the underside of the rim as shown in Figure 4, the upper surface of the rim is preserved and more than that, the entire surface of said rim is in principle kept entirely flat. As a result, it is much easier to seal a top lid afterwards, preserving the seal integrity of the resulting container.

The rib 6 has dimensions h (height) and w (width) chosen such that the height of the sealing groove 12 engraved in the rim is comprised between 0.1mm to 3mm and the width of the sealing groove 12 is comprised between 0.15mm to 5mm. The dimensions of the rib 6 may be slightly higher than the dimensions of the desired sealing groove 12 depending on the elasticity of the material constituting the container body. Moreover, the width of the rib 6 is preferably less than three times its height. In any case, according to the invention, the height of the rib 6 and the height of the sealing groove 12 should be higher than a maximum depth of the wrinkles of the container body 30, the wrinkles depth depending, among others, on the dimensions, the material and the forming conditions of the container body.

It should be understood that various changes and modifications to the presently preferred embodiments described herein will be apparent to those skilled in the art. Such changes and modifications can be made without departing from the scope of the present invention as defined in the appended claims and without diminishing its attendant advantages. It is therefore intended that such changes and modifications be covered by the appended claims.

## Claims

1. Manufacturing process for producing hermetic single-use food containers, including :
- forming a container body (30) having a peripheral rim (31),
- placing the container body in a sealing head having a first die (2) and a second die (8), at least one of which being mobile, the first die and the second die having cooperating annular sealing surfaces (4, 10) facing the rim (31),
- applying a closing lid (34) over the container body (30),
- sealing the closing lid (34) with the rim (31) of the container body by applying the first die (2) and the second die (8) one against the other,
the first die (2) being provided with an annular rib (6) in its sealing surface (4), the rib having a height (h) which is at least equal to a maximum depth of wrinkles that might appear on the rim upon forming the container body, whereby a sealing groove (12) is formed by the rib (6) in a side of the rim when sealing the closing lid (34) to the container body (30), the closing lid being bound to the rim in front of the sealing groove,
wherein the container body (30) is made from a sheet of paper/PLA laminate.

2. Manufacturing process according to claim 1, wherein the container body (30) is made from a sheet of PLA - PVOH - PLA of 50 µm laminated with a formable paper of 130g/m² and wherein the closing lid (34) is made from a sheet including a PLA barrier laminated with a paper of 30g/m².

3. Manufacturing process according to one of claims 1 to 2, wherein the first die (2) is a lower die of a vertical press and the second die (8) is an upper die, whereby the sealing groove (12) is engraved is an underside of the rim (31).

4. Manufacturing process according to one of claims 1 to 3, wherein the sealing surface (10) of the second die (8) is flat and rigid.

5. Hermetic single-use food container, including a container body (30) with a peripheral rim (31), and a closing lid (34) closing the container body, wherein:
- the container body is made in a paper-laminated material and have wrinkles at least at the rim, the wrinkles extending essentially radially, and **characterized in that**:
- the hermetic single-use container shows an annular sealing groove (12) engraved on a side of the rim which extends continuously essentially in a circumferential direction all around the rim and which has a depth at least equal to a maximum depth of the wrinkles whereby the wrinkles are flattened by the sealing groove, the closing lid (34) being bound to the rim of the container body at least in the region of the sealing groove (12).

6. Hermetic single-use food container according to claim 5, wherein the closing lid has a top surface which is flat at least at the rim.

7. Hermetic single-use food container according to one of claims 5 and 6, wherein the sealing groove (12) engraved in the rim is formed in an underside of the rim.

8. Hermetic single use food container according to one of claims 5 to 7, wherein the sealing groove (12) engraved in the rim has a width comprised between 0.15mm and 5mm, and a height comprised between 0.05mm and 3mm.

9. Hermetic single use food container according to one of claims 5 to 8, wherein the container body is made from a sheet of paper/PLA laminate.

10. Hermetic single use food container according to claim 9, wherein the container body (30) is made from a sheet of PLA - PVOH - PLA of 50 µm laminated with a formable paper of 130g/m² and wherein the lid film (34) is made from a sheet including a PLA barrier laminated with a paper of 30g/m².

11. Coffee pod **characterized in that** it includes a hermetic single-use food container according to one of claims 5 to 10.

## Patentansprüche

1. Fertigungsverfahren zum Fertigen von hermetischen Einweglebensmittelbehältern, Folgendes umfassend:
- Formen eines Behälterkörpers (30) mit einem Umfangsrand (31),
- Platzieren des Behälterkörpers in einem Versiegelungskopf mit einer ersten Matrize (2) und einer zweiten Matrize (8), von denen mindestens eine beweglich ist, wobei die erste Matrize und die zweite Matrize zusammenwirkende ringförmige Versiegelungsflächen (4, 10) aufweisen, die dem Rand (31) zugewandt sind,
- Auflegen eines Verschlussdeckels (34) auf den Behälterkörper (30),
- Versiegeln des Verschlussdeckels (34) mit dem Rand (31) des Behälterkörpers durch Aneinanderdrücken der ersten Matrize (2) und der zweiten Matrize (8),
wobei die erste Matrize (2) in ihrer Versiegelungsfläche (4) mit einer ringförmigen Rippe (6) versehen ist, wobei die Rippe eine Höhe (h) aufweist, die mindestens gleich einer maximalen Tiefe von Falten ist, die beim Formen des Behälterkörpers an dem Rand entstehen könnten, wobei durch die Rippe (6) in einer Seite des Randes eine Versiegelungsnut (12) gebildet wird, wenn der Verschlussdeckel (34) mit dem Behälterkörper (30) versiegelt wird,
wobei der Verschlussdeckel dabei vor der Versiegelungsnut mit dem Rand verbunden wird, wobei der Behälterkörper (30) aus einem Bogen Papier-PLA-Laminat ist.

2. Fertigungsverfahren nach Anspruch 1, wobei der Behälterkörper (30) aus einem Bogen PLA - PVOH - PLA von 50 µm ist, der mit einem formbaren Papier von 130 g/m² laminiert ist, und wobei der Verschlussdeckel (34) aus einem Bogen ist, der eine PLA-Barriere einschließt, die mit einem Papier von 30 g/m² laminiert ist.

3. Fertigungsverfahren nach einem der Ansprüche 1 bis 2, wobei die erste Matrize (2) eine untere Matrize einer vertikalen Presse ist und die zweite Matrize (8) eine obere Matrize ist, wobei die Versiegelungsnut (12) in eine Unterseite des Randes (31) geprägt wird.

4. Fertigungsverfahren nach einem der Ansprüche 1 bis 3, wobei die Versiegelungsfläche (10) der zweiten Matrize (8) flach und starr ist.

5. Hermetischer Einweg-Lebensmittelbehälter, der einen Behälterkörper (30) mit einem Umfangsrand (31) und einem Verschlussdeckel (34), der den Behälterkörper verschließt, aufweist, wobei:
- der Behälterkörper aus einem mit Papier laminierten Material ist und mindestens an dem Rand Falten aufweist, wobei sich die Falten im Wesentlichen radial erstrecken, und **dadurch gekennzeichnet ist, dass**:
- der hermetische Einwegbehälter eine auf einer Seite des Randes geprägte, ringförmige Versiegelungsnut (12) aufweist, die sich kontinuierlich im Wesentlichen in einer Umfangsrichtung um den gesamten Rand erstreckt und eine Tiefe aufweist, die mindestens gleich einer maximalen Tiefe der Falten ist, sodass die Falten durch die Versiegelungsnut abgeflacht sind, wobei der Verschlussdeckel (34) mindestens im Bereich der Versiegelungsnut (12) mit dem Rand des Behälterkörpers verbunden ist.

6. Hermetischer Einweglebensmittelbehälter nach Anspruch 5, wobei der Verschlussdeckel eine Oberseite aufweist, die zumindest am Rand flach ist.

7. Hermetischer Einweglebensmittelbehälter nach einem der Ansprüche 5 und 6, wobei die in den Rand geprägte Versiegelungsnut (12) in einer Unterseite des Randes ausgebildet ist.

8. Hermetischer Einweglebensmittelbehälter nach einem der Ansprüche 5 bis 7, wobei die in den Rand geprägte Versiegelungsnut (12) eine Breite zwischen 0,15 mm und 5 mm aufweist, und eine Höhe zwischen 0,05 mm und 3 mm aufweist.

9. Hermetischer Einweglebensmittelbehälter nach einem der Ansprüche 5 bis 8, wobei der Behälterkörper aus einem Bogen Papier-PLA-Laminat ist.

10. Hermetischer Einweglebensmittelbehälter nach Anspruch 9, wobei der Behälterkörper (30) aus einem Bogen PLA - PVOH - PLA von 50 µm ist, der mit einem formbaren Papier von 130 g/m² laminiert ist, und wobei die Deckelfolie (34) aus einem Bogen ist, der eine PLA-Barriere einschließt, die mit einem Papier von 30 g/m² laminiert ist.

11. Kaffeekapsel, **dadurch gekennzeichnet, dass** sie einen hermetischen Einweglebensmittelbehälter nach einem der Ansprüche 5 bis 10 aufweist.

## Revendications

1. Procédé de fabrication permettant de produire des contenants alimentaires hermétiques à usage unique, comportant :
- la formation d'un corps de contenant (30) ayant un rebord périphérique (31),
- la mise en place du corps de contenant dans une tête de scellage ayant une première matrice (2) et une seconde matrice (8), dont au moins l'une est mobile, la première matrice et la seconde matrice ayant des surfaces de scellage (4, 10) annulaires coopérantes faisant face vers le rebord (31),
- l'application d'un couvercle de fermeture (34) par-dessus le corps de contenant (30),
- le scellage du couvercle de fermeture (34) avec le rebord (31) du corps de contenant en appliquant la première matrice (2) et la seconde matrice (8) l'une contre l'autre,
la première matrice (2) étant pourvue d'une nervure annulaire (6) dans sa surface de scellage (4), la nervure ayant une hauteur (h) qui est au moins égale à une profondeur maximale de plis qui pourraient apparaître sur le rebord lors de la formation du corps de contenant, moyennant quoi une rainure de scellage (12) est formée par la nervure (6) dans un côté du rebord lors du scellage du couvercle de fermeture (34) au corps de contenant (30), le couvercle de fermeture étant lié au rebord devant la rainure de scellage, dans lequel le corps de contenant (30) est fabriqué à partir d'une feuille de stratifié papier/PLA.

2. Procédé de fabrication selon la revendication 1, dans lequel le corps de contenant (30) est fabriqué à partir d'une feuille de PLA - PVOH - PLA de 50 µm stratifiée avec un papier formable de 130 g/m² et dans lequel le couvercle de fermeture (34) est fabriqué à partir d'une feuille comportant une barrière de PLA stratifiée avec un papier de 30 g/m².

3. Procédé de fabrication selon l'une des revendications 1 à 2, dans lequel la première matrice (2) est une matrice inférieure d'une presse verticale et la seconde matrice (8) est une matrice supérieure, moyennant quoi la rainure de scellage (12) est gravée dans un côté inférieur du rebord (31).

4. Procédé de fabrication selon l'une des revendications 1 à 3, dans lequel la surface de scellage (10) de la seconde matrice (8) est plate et rigide.

5. Contenant alimentaire hermétique à usage unique, comportant un corps de contenant (30) avec un rebord périphérique (31), et un couvercle de fermeture (34) fermant le corps de contenant, dans lequel :
- le corps de contenant est fabriqué dans un matériau stratifié en papier et a des plis au moins au niveau du rebord, les plis s'étendant de manière sensiblement radiale, et **caractérisé en ce que** :
- le contenant hermétique à usage unique présente une rainure de scellage (12) annulaire gravée sur un côté du rebord qui s'étend de façon continue sensiblement dans une direction circonférentielle tout autour du rebord et qui a une profondeur au moins égale à une profondeur maximale des plis moyennant quoi les plis sont aplatis par la rainure de scellage, le couvercle de fermeture (34) étant lié au rebord du corps de contenant au moins dans la région de la rainure de scellage (12).

6. Contenant alimentaire hermétique à usage unique selon la revendication 5, dans lequel le couvercle de fermeture a une surface supérieure qui est plate au moins au niveau du rebord.

7. Contenant alimentaire hermétique à usage unique selon l'une des revendications 5 et 6, dans lequel la rainure de scellage (12) gravée dans le rebord est formée dans un côté inférieur du rebord.

8. Contenant alimentaire hermétique à usage unique selon l'une des revendications 5 à 7, dans lequel la rainure de scellage (12) gravée dans le rebord a une largeur comprise entre 0,15 mm et 5 mm, et une hauteur comprise entre 0,05 mm et 3 mm.

9. Contenant alimentaire hermétique à usage unique selon l'une des revendications 5 à 8, dans lequel le corps de contenant est fabriqué à partir d'une feuille de stratifié papier/PLA.

10. Contenant alimentaire hermétique à usage unique selon la revendication 9, dans lequel le corps de contenant (30) est fabriqué à partir d'une feuille de PLA - PVOH - PLA de 50 µm stratifiée avec un papier formable de 130 g/m² et dans lequel le film de couvercle (34) est fabriqué à partir d'une feuille comportant une barrière de PLA stratifiée avec un papier de 30 g/m².

11. Dosette de café **caractérisée en ce qu'**elle comporte un contenant alimentaire hermétique à usage unique selon l'une des revendications 5 à 10.
